# EUROPEAN PATENT APPLICATION

(11) **EP 4 578 607 A1**
(43) Date of publication of application: **02.07.2025**
(21) Application number: 23857130.1
(22) Date of filing: 01.08.2023
(51) Int. Cl.: B25J 15/06

(54) **GRIPPER AND WORKPIECE HOLDING METHOD**

(30) Priority: 24.08.2022 JP 2022132974
(71) Applicant: Amada Co., Ltd., Isehara-shi, Kanagawa 259-1196 (JP)
(72) Inventor: TSURUTA, Hiroki, Isehara-shi, Kanagawa 259-1196 (JP)
(74) Representative: Grünecker Patent- und Rechtsanwälte PartG mbB
(86) International application number: PCT/JP2023/028069
(87) International publication number: WO 2024/043015

(57) **Abstract**

A gripper includes: a gripper main body configured to be directly or indirectly attached to a rotating structure provided at a distal end of an arm of a bending robot which is used at least for a bending process for a workpiece; and a suction body configured to be provided at a distal end of the gripper main body and to suck the workpiece, and the suction body includes a suction surface directed in a direction intersecting with a rotation axis of the rotating structure, is configured to be rotatable around an axis as a center, the axis being orthogonal to both of a direction along the rotation axis of the rotating structure and a direction orthogonal to the suction surface, and is positioned in a width of the rotating structure in the direction orthogonal to the suction surface.

## Description

### Technical Field

The present invention relates to a gripper and a workpiece holding method.

### Background Art

In related art, a bending robot has been known which performs assistance or the like for a bending process for a workpiece. For example, as illustrated in Figure 10, Patent Literature 1 discloses a robot for a bending machine, which includes a robot head portion 102 provided at a distal end of an arm, a joint plate 103 provided at a distal end of the robot head portion 102, a shaft 104 provided at a distal end of the joint plate 103, and a plurality of vacuum pads 106 which are provided at distal ends of the base frame 105 attached to the shaft 104 and which are positioned on an upper side or a lower side relative to the robot head portion 102. The base frame 105 and the vacuum pads 106 are configured to be rotatable in a vertical plane around an axis of the shaft 104. The joint plate 103 is configured to be rotatable around an axis of the robot head portion 102 in a vertical plane.

The robot for a bending machine which is disclosed in Patent Literature 1 bends one side edge of a workpiece W by a punch P and a die D of a press brake in a lower-side approach state where the workpiece W is held by the vacuum pads 106 on an upper side relative to the robot head portion 102, thereafter rotates the base frame 105 and the vacuum pads 106 around the axis of the shaft 104, and thereby moves the workpiece W from the upper side to the lower side of the robot head portion 102, for example. Accordingly, another side edge on an opposite side to the one side edge, which is first bent, of the workpiece W is positioned on the press brake side.

The above robot for a bending machine is configured to then rotate the joint plate 103 180° around the axis of the robot head portion 102 from a state where the one side edge on the opposite side of the workpiece W is positioned on the press brake side, to thereby again move the workpiece W from the lower side to the upper side of the robot head portion 102, to return to the lower-side approach state, and to thereafter perform the bending process for the another side on the opposite side of the workpiece W.

Thus, in the robot for a bending machine which is disclosed in Patent Literature 1, for example, after one side edge of the workpiece is bent by the press brake, without performing an orientation change of the robot for a bending machine or re-gripping of the workpiece, another side edge on the opposite side of the workpiece can be bent in the same direction as the one side edge which is first bent. This provides an advantage of shortening a processing time of the workpiece.

### Citation List

### Patent Literature

Patent Literature 1: Japanese Patent Application Laid-Open Publication No. 2001-287185

### Summary

### Problems to be Solved by the Invention

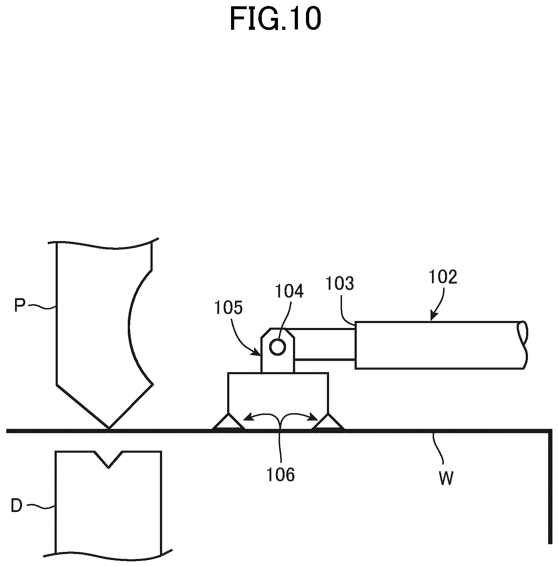

Incidentally, in a robot for a bending machine which is disclosed in Patent Literature 1, in a case where in a state where another side edge on an opposite side of a workpiece is positioned on a press brake side, the another side edge on the opposite side of the workpiece is desired to be bent in a bending direction reverse to the one side edge which is first bent, as illustrated in Figure 10, it is possible that a bending process for a workpiece W is carried out in an upper-side approach state where the workpiece W which is held by suction by vacuum pads 106 is positioned on a lower side relative to a robot head portion 102.

However, in the robot for a bending machine which is disclosed in Patent Literature 1, because the robot head portion 102 is positioned on an upper side relative to the vacuum pads 106 in the above upper-side approach state, when in the bending process for the workpiece W in the above upper-side approach state, an arm of the robot for a bending machine is operated obliquely upward and forward in accordance with a motion in the bending process for the workpiece W, the robot head portion 102 and its distal portions might interfere with a punch P of the press brake or the press brake itself.

Thus, in the robot for a bending machine which is disclosed in Patent Literature 1, it is necessary to perform an operation for re-gripping the workpiece W via an assisting holding device such that the robot head portion 102 is positioned on the lower side relative to the vacuum pads 106. In other robots for a bending machine, there are cases where an operation becomes necessary in which an orientation itself of the robot for a bending machine is changed such that the robot head portion 102 is positioned on the lower side relative to the vacuum pads 106. In both of the cases, there is a problem of a processing time for the workpiece W being needed.

One aspect of the present invention provides a gripper and a workpiece holding method that are capable of further shortening a processing time for a workpiece. Means for Solving the Problems

A gripper according to one aspect of the present invention includes: a gripper main body configured to be directly or indirectly attached to a rotating structure provided at a distal end of an arm of a bending robot which is used at least for a bending process for a workpiece; and a suction body configured to be provided at a distal end of the gripper main body and to suck the workpiece, and the suction body includes a suction surface directed in a direction intersecting with a rotation axis of the rotating structure, is configured to be rotatable around an axis as a center, the axis being orthogonal to both of a direction along the rotation axis of the rotating structure and a direction orthogonal to the suction surface, and is positioned in a width of the rotating structure in the direction orthogonal to the suction surface.

A workpiece holding method according to one aspect of the present invention includes changing a direction of the workpiece by inverting the workpiece by rotating the suction body of the gripper in a state where the workpiece is held by suction by the above gripper.

In the gripper and the workpiece holding method according to one aspect of the present invention, the suction body provided at the distal end of the gripper main body includes the suction surface directed in the direction intersecting with a rotation axis of the rotating structure, is configured to be rotatable around the axis as the center, the axis being orthogonal to both of the direction along the rotation axis of the rotating structure and the direction orthogonal to the suction surface, and is positioned in the width of the rotating structure in the direction orthogonal to the suction surface. Accordingly, because it becomes unnecessary to perform an orientation changing operation for a robot in a bending process for the workpiece or a re-gripping operation for the workpiece, a processing time for the workpiece can further be shortened.

### Effect of the Invention

A gripper and a workpiece holding method according to one aspect of the present invention can further shorten a processing time for a workpiece.

### Brief Description of Drawings

[Figure 1] Figure 1 is an outline diagram illustrating a workpiece supply robot having a gripper according to one embodiment of the present invention.
[Figure 2] Figure 2 is a top view illustrating the gripper according to the embodiment.
[Figure 3] Figure 3 is a partial cross-sectional view taken along line A-A in Figure 2 and illustrating the gripper according to the embodiment.
[Figure 4] Figure 4 is an outline diagram illustrating one example of a rotating operation of the gripper according to the embodiment.
[Figure 5] Figure 5 is an outline diagram illustrating an operation of a bending process by the workpiece supply robot having the gripper according to the embodiment.
[Figure 6] Figure 6 is an outline diagram illustrating the operation of the bending process by the workpiece supply robot having the gripper according to the embodiment.
[Figure 7] Figure 7 is a side view illustrating an operation in the bending process by the gripper according to the embodiment.
[Figure 8] Figure 8 is a side view illustrating the operation in the bending process by the gripper according to the embodiment.
[Figure 9] Figure 9 is an outline diagram illustrating an operation of the bending process by the workpiece supply robot having the gripper according to the embodiment.
[Figure 10] Figure 10 is an outline diagram illustrating an operation of a bending process by a bending robot in related art.

### Description of Embodiment

A gripper and a workpiece holding method according to an embodiment of the present invention will hereinafter be described in detail with reference to the attached drawings. However, the following embodiment does not limit the invention according to each of the claims, and not all combinations of features described in the embodiment are necessarily required for solutions in the invention. Further, in the following embodiment, arrangement, scales, and dimensions of each configuration element might be exaggerated or diminished, and descriptions of a part of the configuration elements might not be made.

### [General Configuration of Workpiece Supply Robot Having Gripper]

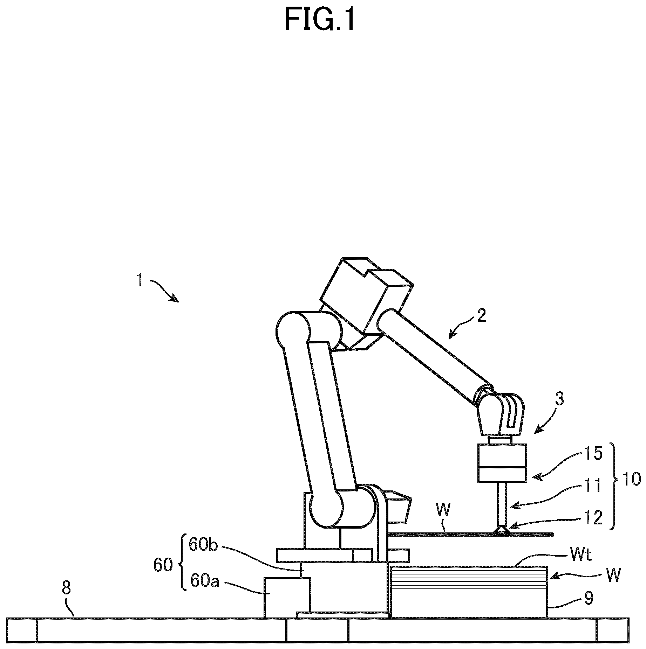

Figure 1 is an outline diagram illustrating a workpiece supply robot having a gripper according to one embodiment of the present invention.

As illustrated in Figure 1, in outline, a workpiece supply robot 1 according to the embodiment is configured to be capable of transporting a highest workpiece Wt from a group of workpieces W which are stacked flat on a workpiece mounting table 9. Note that the group of the workpieces W may be mounted on the workpiece mounting table 9 in a so-called comb-tooth shape. The workpiece supply robot 1 includes a gripper 10 as a robot hand which holds the highest workpiece Wt.

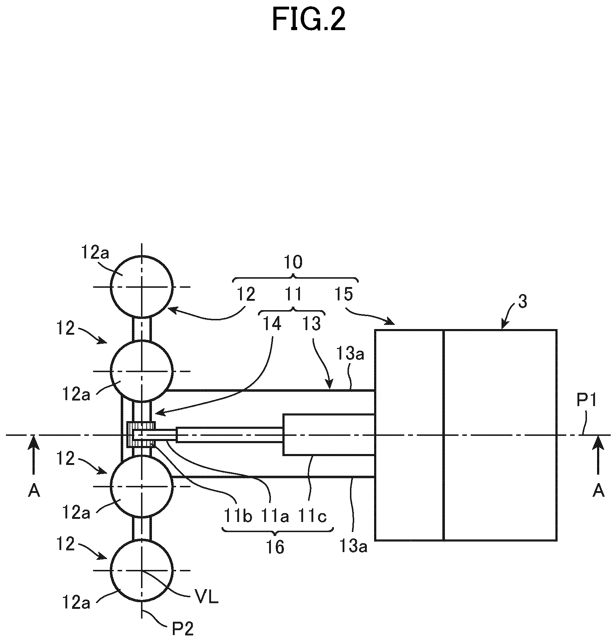

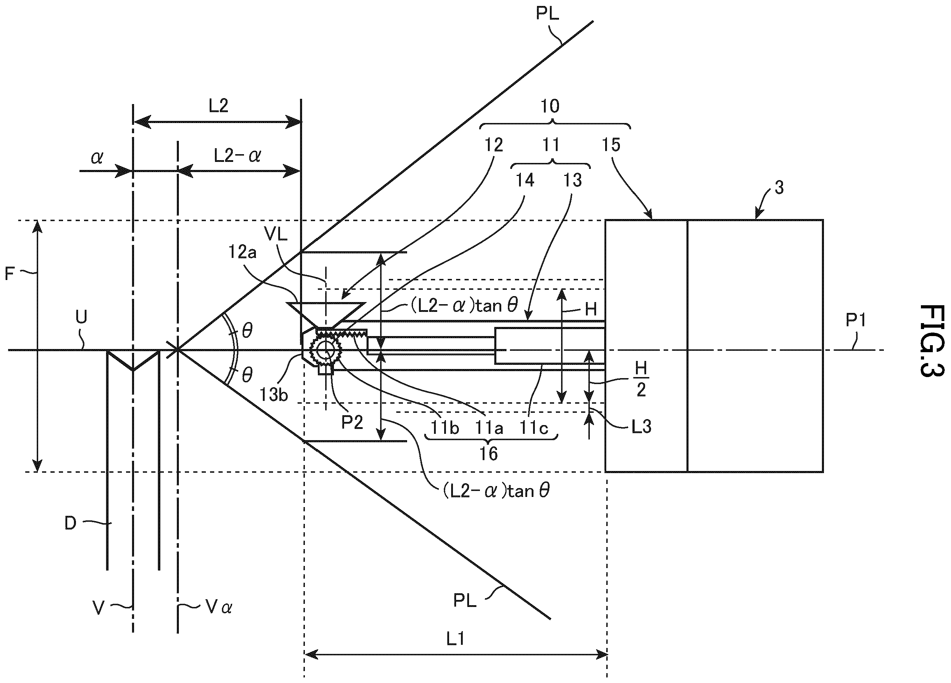

Here, the gripper 10 includes a gripper main body 11 which is directly or indirectly attached to a rotating portion (rotating structure) 3 provided at a distal end of an arm portion (arm) 2 of the workpiece supply robot (bending robot) 1 which is used at least for the bending process for the workpiece W. Further, the gripper 10 includes suction portions (suction bodies) 12 which are provided at a distal ends of the gripper main body 11 and which suck the workpiece W. The suction portion (suction body) 12 includes suction surfaces 12a (see Figure 3 and so forth) which are directed in a direction intersecting with (in the present embodiment, orthogonal to) a rotation axis P1 (see Figure 2 and so forth) of the rotating portion (rotating structure) 3. The suction portion (suction body) 12 is configured to be rotatable around an axis P2 (see Figure 2 and so forth), as a center, which is orthogonal to both of a direction along the rotation axis P1 of the rotating portion (rotating structure) 3 and a direction orthogonal to the suction surfaces 12a. The suction portions (suction bodies) 12 are positioned in a width F (see Figure 3) of the rotating portion (rotating structure) 3 in the direction orthogonal to the suction surfaces 12a.

Note that the workpiece supply robot 1 according to the embodiment may be configured to include a processing machine such as a bending machine (not illustrated and the same applies to the following) and a control device (not illustrated and the same applies to the following) which controls this processing machine and the workpiece supply robot 1 and may be included in a processing system, which performs an automatic process for the workpiece W, together with the processing machine.

### [Detailed Configuration of Workpiece Supply Robot]

The workpiece supply robot 1 is arranged between the workpiece mounting table 9 and a transportation destination of the workpiece W (such as a processing machine, for example). The workpiece supply robot 1 is configured to hold the workpiece W on the work mounting table 9 and to transport the held workpiece W to a transportation destination such as a processing machine.

Specifically, the workpiece supply robot 1 includes a moving mechanism 60, the gripper 10, and the arm portion 2. Further, the workpiece supply robot 1 includes a control unit (not illustrated) which controls each of those portions. The moving mechanism 60 moves the workpiece supply robot 1. The gripper 10 is configured to be capable of holding the workpiece W. The arm portion 2 moves the gripper 10 close to or apart from the workpiece W.

The moving mechanism 60 includes a rail portion 60a, a base stand 60b, and base stand driving means (not illustrated). The rail portion 60a is laid on a floor surface 8. The base stand 60b is configured to be movable along the rail portion 60a. The base stand driving means drives the base stand 60b. The moving mechanism 60 is configured as a so-called linear motion mechanism, for example. The moving mechanism 60 moves the workpiece supply robot 1 on the floor surface 8 in accordance with control by the control unit based on a control signal from a robot control unit (not illustrated) included in the control device. Note that because various known configurations can be employed for the moving mechanism 60, a detailed description thereof will not be made.

In the arm portion 2, one end portion is coupled with the base stand 60b of the moving mechanism 60, and the rotating portion 3 at the other end (distal end) is coupled with the gripper 10. The arm portion 2 is configured to move the gripper 10 close to or apart from the workpiece W in accordance with the control by the control unit based on a control signal from the robot control unit. In the embodiment, the arm portion 2 is an articulated arm having six control axes.

The arm portion 2 is configured to be capable of executing not only transportation of the workpiece W from the workpiece mounting table 9 but also transportation (carrying in) of the workpiece W to a processing machine or the like, assistance for a process (bending process) for the workpiece W, transportation (carrying out) of a product (a processed part of the bending) from the processing machine or the like, and so forth. Note that because various known configurations can be employed for the workpiece supply robot 1 including the arm portion 2, a detailed description thereof will not be made. Further, the arm portion 2 is not limited to the above-described configuration of the articulated arm having the six control axes, and various known configurations can arbitrarily be employed.

### [Configuration of Gripper]

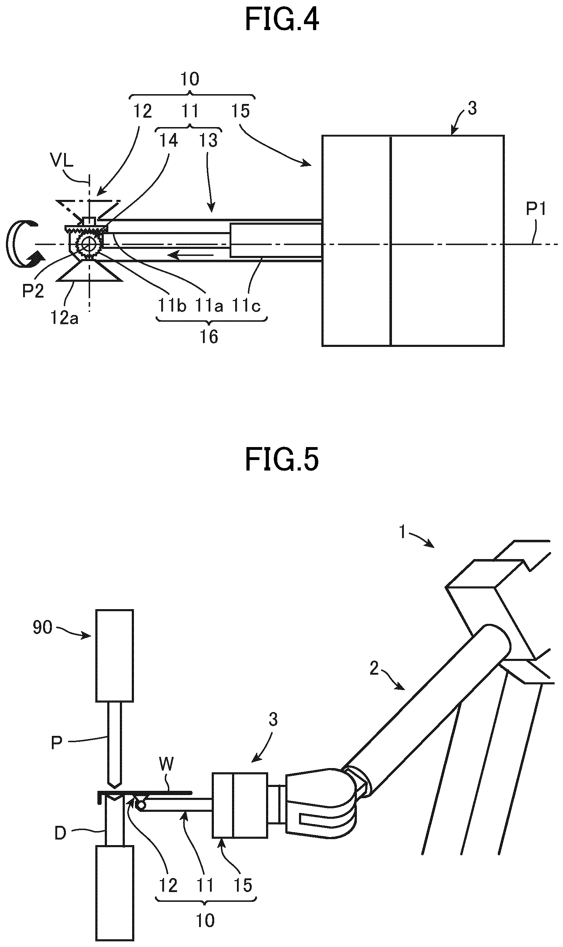

Figure 2 is a top view illustrating the gripper according to the embodiment. Figure 3 is a partial cross-sectional view taken along line A-A in Figure 2 and illustrating the gripper according to the embodiment. Figure 4 is an outline diagram illustrating one example of a rotating operation of the gripper according to the embodiment.

As illustrated in Figure 2 and Figure 3, the gripper 10 has the gripper main body 11 which is detachably installed in the rotating portion 3 at the distal end of the arm portion 2 via, for example, a base member 15 and the plurality of suction portions 12 which are attached to the gripper main body 11 and configured to be capable of holding the workpiece W. The gripper 10 (and the base member 15) configured in such a manner is installed in the arm portion 2 to be 360° rotatable around the rotation axis P1 as a rotation center by rotation of the rotating portion 3. Further, as illustrated in Figure 4, the suction portion 12 is provided to be 180° rotationally movable around the axis P2 as a rotation center in a direction indicated by an arrow in Figure 4 by rotation drive of a rotating mechanism described later.

The gripper main body 11 includes a central shaft portion (first shaft portion) 13 which extends in parallel with an axis direction of the rotation axis P1 of the rotating portion (rotating structure) 3 and a rotating shaft portion (second shaft portion) 14 which extends in a direction intersecting with an axis direction of the central shaft portion (first shaft portion) 13 (an axis direction of the axis P2), for example. The plurality of suction portions (suction bodies) 12 are provided in the rotating shaft portion (second shaft portion) 12 in an extending direction of the axis P2 of the rotating shaft portion (second shaft portion) 14. Note that the gripper main body 11 is installed in the rotating portion 3 such that the central shaft portion 13 and the rotating shaft portion 14 form a T shape, for example, in the top view illustrated in Figure 2. That is, in the present embodiment, the rotating shaft portion 14, which linearly extends in the axis direction of the axis P2 intersecting with the rotation axis P1, is provided at a distal end of the long central shaft portion 13, which linearly extends in parallel with the axis direction of the rotation axis P1. Furthermore, the plurality of suction portions 12 are arranged at intervals in the axis direction of the axis P2 such that the suction surface 12a of each of the suction portions 12 is directed in the same direction. In such a shape, a distance between the rotating portion 3 and each of the suction portions 12 can sufficiently be secured, and a structure can be realized in which even when the workpiece W moves in association with rotation of the rotating shaft portion 14, the workpiece W does not interfere with the rotating portion 3.

Each of the plurality of suction portions 12 is connected, via piping, with an air drawing source (not illustrated), which draws air, at the same position in a circumferential direction of an outer periphery portion of the rotating shaft portion 14 and in a direction along the axis P2. The piping is arranged in an internal portion or an external portion along the gripper main body 11, for example. Each of the suction portions 12 can be configured with a suction pad in a flat shape (a trapezoidal shape in a side view), whose upper end portion configures the suction surface 12a which is capable of sucking to (capable of contacting with) a surface of the workpiece W. Consequently, as illustrated in Figure 1, each of the suction portions 12 is configured such that when the suction surface 12a is moved to become orthogonal to the rotation axis P1, the suction surface 12a is capable of sucking to a surface of the highest workpiece Wt in the group of the workpieces W, which are stacked flat on the workpiece mounting table 9, by air drawing force by the air drawing source through the piping.

Further, the central shaft portion 13 of the gripper main body 11 is positioned in a rotation center portion of the rotating portion 3. The central shaft portion 13 is positioned in the rotation center portion having the rotation axis P1 as the rotation center, and as illustrated in Figure 4, for example, it thereby becomes possible that a suction holding position of the workpiece W by the suction surface 12a in an axis direction of a vertical axis VL intersecting with both of the rotation axis P1 and the axis P2, in a case where directions of the suction portions 12 are changed by rotation of the rotating shaft portion 14, is hardly changed except a thickness of the central shaft portion 13 and a dimension approximately two times a height of the suction portion 12. Further, the central shaft portion 13 is positioned in the above rotation center portion, and it thereby becomes possible that the suction holding position of the workpiece W by the suction surface 12a in the axis direction of the vertical axis VL, in a case where the directions of the suction portions 12 are changed by rotation of the rotating portion 3, is hardly changed similarly. Here, for example, in a case where a range of a projected area of the rotation center portion is set as H, "the rotation center portion of the rotating portion 3" can be defined as follows. That is, as illustrated in Figure 3, when the rotation axis P1 of the rotating portion 3 is caused to agree with an upper surface U of a die D as a tool in a horizontal direction, a distance in the horizontal direction between a bending line V passing through a vertical direction center of the die D and a front surface 13b of the central shaft portion 13 is set as L2, and a distance obtained by subtracting a margin α from the distance L2 is set as L2 - α. Further, an intersection point between a perpendicular line Vα of the margin α and the upper surface U of the die D is set as an origin, and lines which respectively extend on the gripper 10 side obliquely upward and obliquely downward at angles θ with respect to the upper surface U are set as press brake interference lines PL outside which the gripper 10 interferes with the press brake. In addition, when a distance in a radial direction from the range H of the above projected area to an outer side surface 13a of the central shaft portion 13 illustrated in Figure 2 is set as L3, as for the range H of the projected area, H/2 + L3 < (L2 - α) tanθ holds, and H < |2{(L2 - α) tanθ - L3}| thus holds. The angle θ is 45° in a case where the workpiece W is bent by 90°, for example, and can have a range of 15° to 45°, for example. In such a manner, "the rotational center portion of the rotating portion 3" can be defined by the range H of the projected area.

Note that the gripper 10 according to the present embodiment further includes the base member 15 which couples the gripper main body 11 with the rotating portion (rotating structure) 3 as described above. Furthermore, the central shaft portion 13 has such a length that the workpiece W does not interfere with the base member 15 when the suction portions (suction bodies) 12 rotate while sucking and holding the workpiece W. Further, the gripper main body 11 incorporates a rotating mechanism 16 which rotates the suction portions (suction bodies) 12. The base member 15 is provided between the gripper main body 11 and the rotating portion 3, the gripper main body 11 can thereby indirectly be attached to the rotating portion 3, and it becomes possible to increase variations of attachment. Note that it is also possible to attach the gripper main body 11 directly to the rotating portion 3 without using the base member 15.

As illustrated in Figure 3, a length (a length along the rotation axis P1) L1 of the central shaft portion 13 of the gripper main body 11 is set to a length longer than L/2 if a length of the workpiece W along the rotation axis P1 in a state where the workpiece W is held by suction is set as L and each of the suction portions 12 sucks a part passing through a central portion of the workpiece W. On the other hand, if each of the suction portions 12 sucks a part passing through the vicinity of an end portion of the workpiece W, the length L1 of the central shaft portion 13 is set to a length longer than the length L of the workpiece W along the rotation axis P1 ([L/2, L] < L1). More specifically, the length L1 of the central shaft portion 13 is set to approximately 7 cm, for example. The length L1 of the central shaft portion 13 is set in such a manner, and because interference with the base member 15 thereby does not occur even in a state where each of the suction portions 12 sucks and holds the workpiece in either direction of upward and downward directions, trouble in the bending process due to interference can be prevented. Here, the length L of the workpiece W along the rotation axis P1 in a state where the workpiece W is held by suction denotes a linear distance along the rotation axis P1 from an end portion on the base member 15 side to an end portion on an opposite side to that (an end portion on a press brake 90 side) in the workpiece W in a state where that is held by suction by the suction portions (suction bodies) 12. For example, in a case where a rectangular workpiece W is held by suction such that a long side edge of the workpiece W becomes parallel with the central shaft portion 13, the length L of the workpiece W along the rotation axis P1 means the linear distance along the rotation axis P1 from one short side edge to the other short side edge of the workpiece W. On the other hand, in a case where the rectangular workpiece W is held by suction such that the long side edge of the workpiece W is inclined with respect to the central shaft portion 13, the length L of the workpiece W along the rotation axis P1 means the linear distance along the rotation axis P1 from a vertex of the workpiece W on the base member 15 side to a vertex opposite to that (a vertex on the press brake 90 side).

Further, as illustrated in Figure 2 to Figure 4, the rotating mechanism 16 incorporated in the gripper main body 11 includes a rack portion 11a, a pinion portion 11b provided on an outer periphery side of the rotating shaft portion 14, and a drive section 11c. The drive section 11c is configured with an electric cylinder provided in an internal portion of the central shaft portion 13, for example. Alternatively, instead of the rack portion 11a, an electric motor or the like which is capable of belt drive or the like can be employed for the drive section 11c. The rack portion 11a is provided on a distal end side of the drive section 11c housed in the internal portion of the central shaft portion 13. The pinion portion 11b is provided on an outer periphery side of a central portion of the rotating shaft portion 14 in the direction along the axis P2 and meshes with the rack portion 11a.

In the rotating mechanism 16 configured in such a manner, when the rack portion 11a is moved by the drive section 11c in a direction along the rotation axis P1, because the rotating shaft portion 14 moves rotationally around the axis P2 together with the pinion portion 11b, each of the suction portions 12 can be rotated freely in 180°, for example, in a vertical plane of the vertical axis VL. In addition, because the rotating mechanism 16 is incorporated in the gripper main body 11, quality of an external appearance is not impaired.

### [Operation of Bending Process by Workpiece Supply Robot]

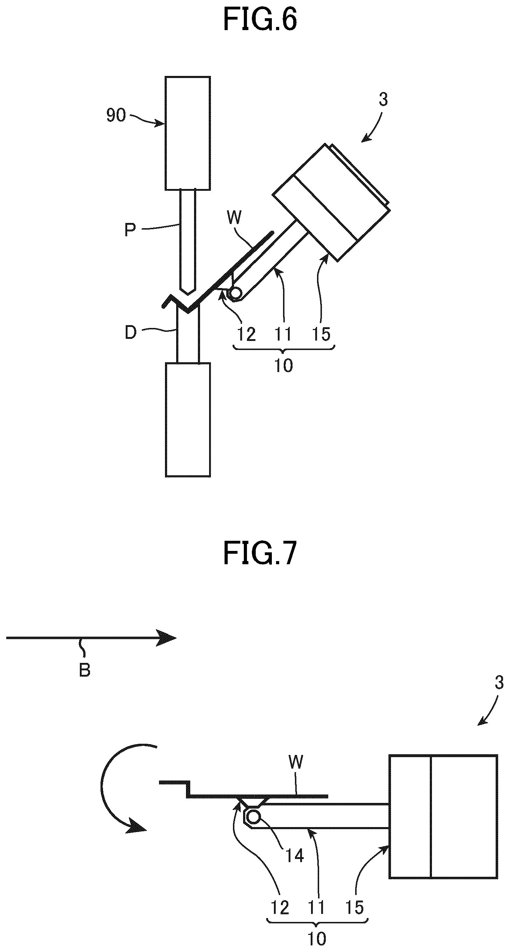

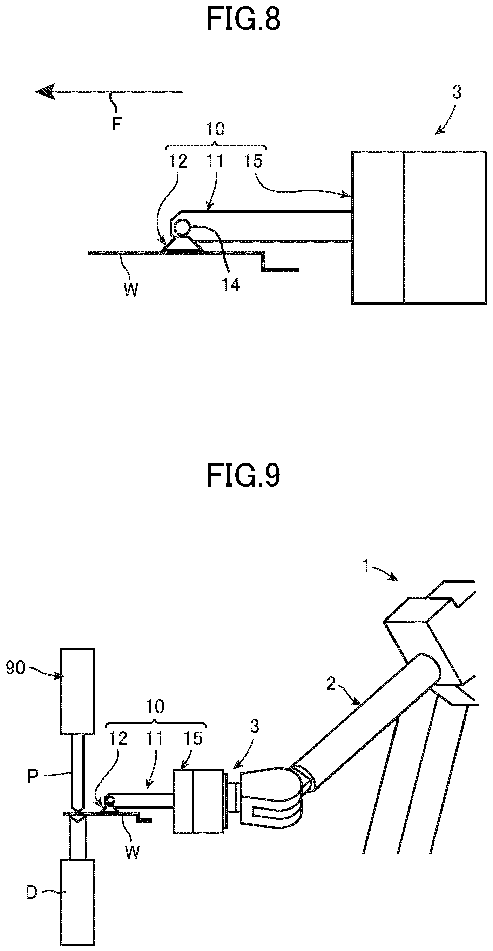

Figure 5 is an outline diagram illustrating an operation of the bending process by the workpiece supply robot having the gripper according to the embodiment. Figure 6 is an outline diagram illustrating the operation of the bending process by the workpiece supply robot having the gripper according to the embodiment. Figure 7 is a side view illustrating an operation in the bending process by the gripper according to the embodiment. Figure 8 is a side view illustrating the operation in the bending process by the gripper according to the embodiment. Figure 9 is an outline diagram illustrating an operation of the bending process by the workpiece supply robot having the gripper according to the embodiment.

In the operation of the bending process for the workpiece W by the workpiece supply robot 1, in a state where the workpiece W is held by suction by the above gripper 10, the workpiece W is displaced (inverted) by rotating the suction portions (suction bodies) 12 of the gripper 10, and a direction of the workpiece W is thereby changed.

First, as illustrated in Figure 1, the workpiece supply robot 1 rotates the rotating shaft portion 14 such that the suction surface 12a of each of the suction portions 12 of the gripper 10 is set in a lateral direction which intersects with the rotation axis P1 and thereby changes the position of each of the suction portions 12. Then, the highest workpiece Wt of the group of the workpieces W is held by suction by the gripper 10. Subsequently, the workpiece W held by suction is transported to (carried into or carried out from) the press brake. Note that the workpiece W is an object to be machined, which is a so-called small article having comparatively small dimensions, for example, or a strip-shaped object to be machined, which is long in a left-right direction and short in a front-rear direction in a case where the press brake is set as a reference, for example.

For example, as illustrated in Figure 5, in the workpiece supply robot 1 according to the embodiment, in a state where the gripper 10 sucks and holds the workpiece W and in a front orientation in which the axis direction of the rotation axis P1 of the rotating portion 3 becomes a direction which is almost directly opposed to the press brake 90, the workpiece W can be caused to approach the press brake 90. Thus, it becomes possible to carry out the bending process by moving the gripper 10 sufficiently close to the punch P and the die D of the press brake 90.

For example, in a case where one side edge of the workpiece W, which is first bent by the press brake 90, is successively bent in a reverse bending direction, from an upper-side approach orientation in which the gripper 10 is positioned above the workpiece W and each of the suction portions 12 is directed downward, the base member 15, the gripper main body 11, and each of the suction portions 12 are together rotated 180° around the rotation axis P1 as the rotation center by rotation of the rotating portion 3. Accordingly, the bending direction of the one side edge, which is first bent, of the workpiece W is switched from an upward direction to a downward direction, and a lower-side approach orientation as illustrated in Figure 5 is set in which the gripper 10 is positioned below the workpiece W and each of the suction portions 12 is directed upward. From this state, the one side edge, which is first bent, of the workpiece W held by suction by the gripper 10 is inserted between the punch P and the die D, while the front orientation is maintained, is caused to abut a back gauge (not illustrated) of the press brake 90, and is thereby positioned.

Subsequently, as illustrated in Figure 6, following is performed in which when a second bending process is carried out, the arm portion 2 is moved obliquely upward toward the press brake 90 in accordance with a trajectory of following by the workpiece supply robot 1 in each phase of bending order and is caused to follow springing of the workpiece W. Accordingly, the one side edge, which is first bent, of the workpiece W can successively be folded in a crank shape. After the one side edge which is first bent is folded in the crank shape, as illustrated in Figure 7, the gripper 10 is returned to the front orientation, and the workpiece W and the gripper 10 are then retracted in a direction to move apart from the press brake 90, which is indicated by an arrow B in Figure 7. Note that the gripper 10 may be returned to the front orientation after folding is performed and the workpiece W and the gripper 10 are retracted, without an orientation change, in the direction to move apart from the press brake 90, which is indicated by the arrow B in Figure 7. Furthermore, for example, in a case where another side edge on an opposite side to the one side edge, which is first bent, of the workpiece W is bent in a reverse direction to a bending direction of second bending (crank-shaped folded portion), each of the suction portions 12 is 180° rotated as indicated by an arrow in Figure 7 by rotating the rotating shaft portion 14 by the rotating mechanism 16 such that the another side edge on the opposite side of the workpiece W is directed toward the press brake 90 side.

Accordingly, as illustrated in Figure 8, the upper-side approach orientation is set in which it is possible to set the bending direction of the one side edge on the opposite side to the one side edge, which is first bent, of the workpiece W to a reverse direction, the gripper 10 is positioned above the workpiece W, and each of the suction portions 12 is directed downward. From this state, the workpiece W and the gripper 10 are pushed out in a direction to move close to the press brake 90, which is indicated by an arrow F in Figure 8. In such a manner, as illustrated in Figure 9, the another side edge on the opposite side of the workpiece W held by suction by the gripper 10 is inserted between the punch P and the die D, while the front orientation is maintained, is caused to abut the back gauge (not illustrated) of the press brake 90, and is thereby positioned. Then, the following is performed in which when a third bending process is carried out, the arm portion 2 is moved obliquely upward toward the press brake 90 in accordance with the trajectory of the following by the workpiece supply robot 1 in each phase of bending order and is caused to follow springing of the workpiece W.

As described above, because the workpiece supply robot 1 having the gripper 10 according to the embodiment does not need a re-gripping operation of the workpiece W and does not need an operation for changing an orientation of the distal end side of the arm portion 2, the bending process in a next step can be carried out without a long interruption in a processing time of the bending process, the processing time can thus be shortened, and productivity can significantly be improved.

### [Effects of Workpiece Supply Robot Having Gripper According to the Embodiment]

As described above, the gripper 10 according to one embodiment is different from a form in which the suction portions 12 are directly provided on the rotating portion 3 at the distal end of the arm portion 2 and includes the gripper main body 11 which extends from the rotating portion 3 in the axis direction of the rotation axis P1, and the plurality of suction portions 12 are provided on the distal end side of the gripper main body 11.

Further, the suction surface 12a of each of the suction portions 12 is directed in the direction intersecting with the rotation axis P1 of the rotating portion 3, and each of the suction portions 12 is rotatable 180° around the axis P2, as the center, which is orthogonal to both of the direction along the rotation axis P1 and the direction orthogonal to the suction surfaces 12a. Thus, because it is possible to provide a long distance between the rotating portion 3 and each of the suction portions 12 and the gripper 10 can be caused to approach the press brake 90 in the front orientation, the distal end of the arm portion 2 does not interfere with the press brake 90 or the like, and the bending process can certainly be carried out even for a small workpiece W.

Further, because the gripper 10 according to the embodiment has a structure in which the gripper 10 can rotate 360° around the rotation axis P1 of the rotating portion 3 as the rotation center in a vertical plane and each of the suction portions 12 can rotate 180° around the axis P2 as the rotation center in the vertical plane of the vertical axis VL, the direction of the workpiece W can freely be changed, and the bending process can thereby be carried out for all side edges without performing the above orientation changing operation or re-gripping operation. Furthermore, because each of the suction portions 12 is positioned in the width (for example, an outer diameter of the distal end of the arm portion 2 including the rotating portion 3) F of the rotating portion 3 in the direction orthogonal to the suction surface 12a (for example, the axis direction of the vertical axis VL), in the above-described upper-side and lower-side approach orientations, the workpiece W can be prevented from causing interference in a height direction by moving beyond the width F.

### [Modifications]

In the above, a description is made about a preferable embodiment of the present invention, but the technical scope of the present invention is not limited to the scope of the descriptions of the embodiment. Various changes or improvements can be applied to the above-described embodiment.

For example, in the above-described embodiment, a description is made about a case where each of the suction portions 12 is transported to the press brake 90 in an upward or downward approach orientation, but this is not restrictive. For example, an obliquely directed approach orientation may be set such that the each of the suction portions 12 is directed in a direction at 45° with respect to a horizontal plane and a vertical plane.

In the above-described embodiment, a description is made about a case where in the gripper main body 11, the central shaft portion 13 and the rotating shaft portion 14 have linear shapes and are formed into the T shape in the top view, but this is not restrictive. For example, a portion corresponding to the central shaft portion 13 may be bent in a crank shape in a side view or may be folded to configure a plurality of protrusion and recess portions in a bellows shape in such a manner that the above portion does not interfere with a folded portion of the workpiece W. In this case, the rotating shaft portion 14 may be provided not only at the distal end of the central shaft portion 13 but also in a halfway portion of the protrusion and recess portions.

Further, in the above-described embodiment, a description is made about a case where the rotating mechanism 16 is incorporated in the gripper main body 11, but this is not restrictive. The rotating mechanism 16 may partially be incorporated in the base member 15 or may be provided in the external portion of the gripper main body 11. Further, a length of the gripper main body 11 in the direction along the rotation axis P1 (the length L1 of the central shaft portion 13) and a length in the direction along the axis P2 (a length of the rotating shaft portion 14) are not limited to those described above as long as the lengths are such lengths that the workpiece W held by suction by each of the suction portions 12 does not interfere with the base member 15 (the rotating portion 3 in a case where no base member 15 is provided) due to rotation of each of the suction portions 12 and the workpiece W can sufficiently be held by suction.

In the foregoing, the embodiment of the present invention is described, but this embodiment is presented as an example and is not intended to limit the scope of the invention. This novel embodiment can be carried out in various other forms, and various omissions, substitutions, and changes can be made without departing from the gist of the invention. The embodiment and modifications thereof are included in the scope and gist of the invention and are also included in the scope of the invention recited in the claims and their equivalents.

### Reference Signs List

- 1: workpiece supply robot
- 2: arm portion
- 3: rotating portion
- 8: floor surface
- 9: workpiece mounting table
- 10: gripper
- 11: gripper main body
- 11a: rack portion
- 11b: pinion portion
- 11c: drive section
- 12: suction portion
- 12a: suction surface
- 13: central shaft portion
- 14: rotating shaft portion
- 15: base member
- 16: rotating mechanism
- 90: press brake

## Claims

1. A gripper comprising:
a gripper main body configured to be directly or indirectly attached to a rotating structure provided at a distal end of an arm of a bending robot which is used at least for a bending process for a workpiece; and
a suction body configured to be provided at a distal end of the gripper main body and to suck the workpiece, wherein
the suction body includes a suction surface directed in a direction intersecting with a rotation axis of the rotating structure, is configured to be rotatable around an axis as a center, the axis being orthogonal to both of a direction along the rotation axis of the rotating structure and a direction orthogonal to the suction surface, and is positioned in a width of the rotating structure in the direction orthogonal to the suction surface.

2. The gripper according to claim 1, wherein the gripper main body incorporates a rotating mechanism configured to rotate the suction body.

3. The gripper according to claim 1 or 2, wherein
the gripper main body includes a first shaft portion configured to extend in parallel with an axis direction of the rotation axis of the rotating structure and a second shaft portion configured to extend in a direction intersecting with an axis direction of the first shaft portion, and
a plurality of the suction bodies are provided on the second shaft portion in an extending direction of the second shaft portion.

4. The gripper according to claim 3, further comprising
a base member configured to couple the gripper main body with the rotating structure, wherein
the first shaft portion has such a length that when the suction body rotates while sucking and holding the workpiece, the workpiece does not interfere with the base member.

5. A workpiece holding method comprising
changing a direction of the workpiece by inverting the workpiece by rotating the suction body of the gripper in a state where the workpiece is held by suction by the gripper according to claim 1 or 2.
